# EUROPEAN PATENT SPECIFICATION

(11) **EP 3 471 983 B1**
(45) Date of publication and mention of the grant of the patent: **04.08.2021**
(21) Application number: 17754597.7
(22) Date of filing: 16.06.2017
(51) Int. Cl.: B60J 5/06, B62D 33/04

(54) **SIDE WALL WITH FOLDING PLATES**
SEITENWAND MIT FALTPLATTEN
PAROI LATÉRALE À PLAQUES DE PLIAGE

(30) Priority: 17.06.2016 BE 201605448
(43) Date of publication of application: 24.04.2019
(73) Proprietor: Versus Invest BVBA, 3660 Opglabbeek (BE)
(72) Inventor: ROGIERS, Erik Ronny Felix, 3850 Kozen (BE)
(74) Representative: Philippaerts, Yannick
(86) International application number: PCT/BE2017/000029
(87) International publication number: WO 2017/214689

(56) References cited:
- EP-A1- 1 782 986
- EP-A2- 2 397 394
- WO-A1-97/32745
- DE-A1-102014 013 726
- DE-A1-102014 115 652
- FR-A1- 2 740 096
- GB-A- 2 106 573
- US-A- 4 762 361

## Description

The invention relates to a system for suspending a tarpaulin for the purpose of closing a side of a loading space. Such suspension systems typically comprise a support beam provided with rails in which wheels of carriages can roll. The tarpaulin is suspended from these carriages.

Loading spaces enclosed by load containers, in particular mobile load containers situated on trucks and/or trains, must comply with predetermined maximum outer dimensions. These outer dimensions are often imposed by law. The loading space, which is the space effectively available inside the load container, is limited by these prescribed maximum dimensions. Sides of such loading spaces are often closed off with a tarpaulin which can be slid open in order to thus provide access to the loading space via the respective side. In order to obtain maximum loading space the tarpaulin is attached to an outermost peripheral edge of the load container.

The tarpaulin is typically suspended directly or indirectly from carriages which can roll over tracks in rails present in a support beam. The carriages bear the tarpaulin and are themselves supported by the support beam. The carriages allow sliding open of the tarpaulin by tolling the carriages over the rails to one end of the support beam in the longitudinal direction of the support beam. When the tarpaulin is opened the wheels roll over the tracks in the rails, whereby the resistance to opening of the tarpaulin is minimized. The known suspension system for tarpaulins are preferably optimized here in order to prevent the possibility of the carriages jamming when the tarpaulin is slid open. Wheels could jam particularly when an operator attempts to slide the tarpaulin open too quickly or too roughly.

When a container with a closing tarpaulin has to be loaded or unloaded in a logistics environment, the time pressure is often very considerable, whereby these closing tarpaulins are substantially always opened quickly and roughly. Another example is when a truck, provided with a loading space with a side wall closed by a tarpaulin, wholly or partially blocks a street in order to make a delivery to or pick something up from a shop, for instance in a city centre, and the tarpaulin will also be substantially always opened quickly and roughly.

EP 2 708 395 describes a system for attaching a tarpaulin for the purpose of closing a side, wherein the carriages are formed with a plurality of sets of wheels which are oriented relative to each other and relative to the support beam of the system such that the tarpaulin can be opened and closed in a reliable manner and without the system jamming. Even in situations where the tarpaulin is opened or closed quickly and/or roughly the wheels will move in a correct manner relative to the support beams. EP 2 708 395 also explicitly describes an embodiment wherein the system for closing a side of a loading space is provided with a lower support beam and with an upper support beam, and wherein upright supporting beams extend between the lower and the upper support beam and are connected there via respectively lower carriages and upper carriages. The tarpaulin is connected here to the upright supporting beams. An advantage of such a configuration is that the tarpaulin is guided by carriages at the top of the side as well as at the bottom of the side and is also connected to the loading space via these carriages. Document DE 10 2014 115 652 shows inserted panels with external hinge zones by means of the tarpaulin material in between. Documents FR 2740096 and GB 2106573 also show systems for closing a side of a loading space.Document EP1782986 discloses a roof folding tarpaulin in which the folding direction is supported by the purlins or girders on the roof structure.

A further advantage relates to the securing of cargo. In the closed state the upright supporting beams form together with the lower and the upper support beams a framework which can absorb high lateral forces without the tarpaulin even being Loaded such that a cargo can be held in the loading space. The upright supporting beams can further function as connection posts to which goods can be connected in the loading space so that their position is fixed.

It is noted in this context that systems exist wherein the tarpaulin is connected only via an upper support beam and wherein an underside of the tarpaulin is connected via attaching means, such as buckles, to a lower support beam when the side wall is closed. In order to open a tarpaulin with the latter configuration the buckles are first unfastened such that the bottom part of the tarpaulin is no longer connected to the loading space, after which the tarpaulin can then be slid open.

The present invention relates particularly to a system for attaching a tarpaulin for the purpose of closing a side of a loading space with an upper support beam and a lower support beam, wherein upright supporting beams extend between the lower and the upper support beams and are connected via respective carriages to the support beams, and wherein the tarpaulin is connectable to the upright supporting beams.

It is an object of the invention to improve the operation of the system for suspending a tarpaulin for the purpose of closing a side of a loading space.

The invention provides for this purpose a system for attaching a tarpaulin for the purpose of closing a side of a loading space, which system comprises an upper support beam and a lower support beam situated at the height of respectively an upper side and a lower side of the loading space, which system further comprises a plurality of upright supporting beams which each comprise an upper carriage compatible with the upper support beam and a lower carriage compatible with the lower support beam such that the upright supporting beams are connected via the carriages to the support beams and are movable in the longitudinal direction relative to the support beams, which plurality of upright supporting beams are provided for the purpose of connecting to the tarpaulin so that the tarpaulin can be opened and closed by moving the upright supporting beams, characterized in that the system further comprises folding plates which are preferably manufactured from plastic and each comprise a substantially central pivot zone and two peripheral pivot zones, wherein the folding plates mutually connect adjacent upright supporting beams in a manner such that at least one of the peripheral pivot zones of each folding plate extends against an outer side of a respective supporting beam and at a distance from the edge of this outer side.

In the system for attaching a tarpaulin according to the invention folding plates are provided between adjacent upright supporting beams. The folding plates are mounted here against the upright supporting beams such that the folding plates can fold in only one direction. This is the direct consequence of positioning a peripheral pivot zone against an outer side of the upright supporting beam and at a distance from the edge thereof. The pivot zone, and a portion of the folding plate located at the pivot zone, is hereby mounted against the outer side of the upright supporting beam. This has the result that the folding plate cannot fold in the direction of the interior of the loading space because at least one peripheral hinge is blocked in this folding direction because it lies against the outer side of the upright support wall. The folding plate will as a result have to fold in a direction away from the loading space so that during opening of the system all folding plates will consistently fold away from the loading space. When a tarpaulin is attached to the upright supporting beams, this tarpaulin will therefore be folded consistently by the folding plates to a concertina form oriented outwardly of the loading space. This prevents the tarpaulin folding inward when being slid open. It is noted here that the tarpaulin is further not provided with auxiliary means or mechanisms for bringing about outward folding of the tarpaulin. This is because the folding plates, and in particular the mounting of the folding plates relative to the upright supporting beams according to the invention, have the direct consequence that the tarpaulin is forced to fold outward consistently and correctly in concertina form even without auxiliary means or additional mechanisms.

The system for attaching a tarpaulin for closing a side of a tarpaulin for the purpose of closing a side of a loading space according to the invention has two surprising advantages. A first surprising advantage relates to construction of the system. During construction of a loading space. in particular a side of a loading space, the tarpaulin will typically be mounted as last, or one of the last elements. Because folding plates are provided between upright supporting beams, the upright supporting beams are already mounted relative to each other with a predetermined intermediate spacing before the tarpaulin is mounted. In the system according to the invention the tarpaulin no longer forms the only connection between adjacent upright supporting beams. This allows the system according to the invention to be preconfigured, manipulated and tested without mounting the tarpaulin. This is found in practice to be a surprising advantage of the invention.

A second surprising advantage results when a loading space is used which is provided with a system for closing a side of a loading space according to the invention, particularly in a situation in which the side wall is closed and wherein the loading space is loaded or unloaded in a direction substantially parallel to the closed side wall. In such situations collisions with the upright supporting beam can occur, wherein the direction of the collision extends in large part in the direction of the side wall. Such a collision is caused for instance when a pallet is driven into a loading space in a direction substantially parallel to the side wall, and wherein the pallet or forklift truck comes too close to the side wall and makes contact with a supporting beam. The upright supporting beams are provided so as to move in the longitudinal direction such that the upright supporting beams do not absorb this force, or hardly so, and tend rather to also displace. In a situation where the tarpaulin is the only element connecting adjacent upright supporting beams to each other, the full force of the collision will have to be absorbed by the tarpaulin. In practice there wilt be regular tearing of the tarpaulin as a result of such collisions. In the system according to the invention not only will the tarpaulin connect adjacent upright supporting beams, but plastic folding plates will also extend between these supporting beams. Tests have surprisingly revealed that the plastic folding plates can absorb a part of the energy of the collision such that the tarpaulin has considerably less of a tendency to tear. The folding plates are manufactured from plastic, which is not only inexpensive but which also has good shock-absorbing properties. More specifically, the elasticity and hardness of plastic folding plates is found to be optimal in absorbing energy from a collision as described above and in thereby reducing the forces on the tarpaulin resulting from the collision. The above advantages demonstrate that a system for closing a side of a loading space according to the invention is simpler to construct and has an improved operation.

The folding plates preferably extend between the upright supporting beams at the location of a lower zone of the supporting beams, and the folding plates are elongate, wherein the peripheral pivot zone is located at opposite longitudinal ends. When the folding plates extend between the supporting beams in a lower zone thereof, the folding plates will further be able to function as impact strip, wherein goods can strike against the folding plates during loading and unloading without direct contact being made with the tarpaulin. Tests have further shown that the above described effect of absorbing collisions is implemented to greatest and optimal extent when the folding plates are located in a lower zone. Tests have demonstrated namely that the greatest absorption of collisions is usually in this lower zone. The folding plates are preferably elongate here and extend with their length direction in the direction of the upper and lower support beams. The peripheral pivot zones are then formed at opposite longitudinal ends and lie against the outer side of the upright support wall.

The lower zone is preferably located above a loading floor of the loading space and at a maximum height relative to the loading floor of 0.5 m, preferably 0.3 m, more preferably 0.2 m. Tests have shown that when the folding plates are placed above the loading floor and at a maximum height of 0,5 m, preferably 0.3 m. more preferably 0.2 m, the folding plates will guide the tarpaulin optimally into concertina form and will be able to function optimally as elements for absorbing shocks resulting from collisions.

The folding plates are preferably mounted between adjacent upright supporting beams so that each peripheral pivot zone extends against an outer side of a respective supporting beam and at a distance from the edge of the outer side. Each peripheral hinge of each folding plate is blocked here against pivoting to an interior of the loading space. A reliable operation of the folding plates can hereby be guaranteed, wherein the folding plates move outward relative to the loading space and thus guide the tarpaulin. This movement is guaranteed without the folding plates having to support along their full length with their inner side against a support beam.

The upright supporting beams are preferably of trapezoidal cross-section such that the outer side of the supporting beam is wider than the inner side of the supporting beam. Because of the trapezoidal cross-section of the upright supporting beam there is sufficient space on the outer side of the supporting beam to mount two peripheral pivot zones of two folding plates, each extending in a different direction. The trapezoidal shape will further have the result that, when an object collides with the upright supporting beam in a direction substantially parallel to the side wall as described above, the object will slide off the trapezoidal shape in the direction of the interior of the loading space. The trapezoidal upright supporting beams in combination with the folding plates attached against the supporting beams will hereby function as guard rail for goods which are moved along and/or against the side wall, in order to keep these goods in the loading space. The impact of the collision is further minimized in that objects are guided by the combination of folding plate and trapezoidal upright supporting beam to the interior of the loading spece.

Each folding plate is preferably formed so that a stiff plate part extends in each case between the central pivot zone and each of the two peripheral pivot zones. Because the stiff plate parts are provided between central folding parts and peripheral pivot parts, the plates are optimized for pushing a tarpaulin into a concertina shape. The stiff plate parts prevent the folding plate, and thereby also the tarpaulin, being folded at locations and in directions which are not optimal.

Each folding plate preferably has a straightened position, end the stiff plate part has a thickened portion which, in the straightened position of the folding plate, is oriented in the direction of the interior of the loading space. The thickened portion more preferably rests against the edge of the upright supporting beam. By having the thickened portion extend toward an interior of the loading space the impact surface of the folding plate, i.e. the surface with which goods located in the loading space first collide, is offset inward such that the function of the folding plate as guard rail for goods is further optimized. When this thickened portion rests against the edge of the upright support wall, the function of guard rail can be further optimized in that an object which scrapes against a folding plate can be guided to an upright supporting beam where the object can be pushed further in the direction of the interior of the loading space. This latter is brought about particularly by the trapezoidal upright support wall,

At least two folding plates are preferably mounted between adjacent upright supporting beams, wherein a first folding plate is positioned in the lower zone and wherein a second folding plate is positioned in the upper half of the upright supporting beams. The folding of the tarpaulin is better controlled by providing two folding plates in upright supporting beams. During construction of such a side wall the system will further also have a higher stability, particularly when the tarpaulin is not yet attached to the upright supporting beams.

The upper support beam is preferably provided with an upper rail which extends in a longitudinal direction and wherein the upper carriages of the upright supporting beams are provided so as to be guided in the longitudinal direction by the upper rail, and wherein the lower support beam is provided with a lower rail which extends in longitudinal direction and wherein the lower carriages of the upright supporting beams are provided so as to be guided in the longitudinal direction by the lower rail. The carriages and the rails are preferably constructed here as described in EP 2 708 395. EP 2 708 395 is preferably incorporated herein by way of reference for the description of the rail and the carriages.

The upright supporting beams are preferably provided with attaching means which are compatible with the folding plates so that the folding plates can be connected to the upright supporting beams. The attaching means here preferably comprise a slot and the folding plates preferably comprise a thickened portion on either side, this such that the folding plates can engage with their thickened portion in the slot by means of a movement in the longitudinal direction of the upright supporting beams. When the folding plates are connected via attaching means, preferably a slot and a thickened portion, to the upright supporting beams, assembly and maintenance or repair of the system is simple. It is noted here that, when other means are connected to the tarpaulin in order to fold the tarpaulin in the correct direction, these means are typically very difficult to replace. In the preferred configuration of the invention the folding plates can be replaced without the tarpaulin having to be detached and without upright supporting beams having to be disassembled.

The invention further relates to a trailer of a truck provided with a system according to the invention. The invention further relates to a wagon for a train wherein at least one side wall is provided with a system according to the invention.

The invention will now be further described on the basis of an exemplary embodiment shown in the drawing.

In the drawing:
figure 1 shows a trailer for a truck, a side wall of which is provided with a system according to an embodiment of the invention;
figure 2 shows a cross-section of an upright supporting beam with folding plates in straightened state;
figure 3 shows a cross-section of an upright supporting beam with folding plate in folded state; and
figure 4 shows an accessary with folding plate.

The same or similar elements are designated in the drawing with the same reference numerals.

A folding plate is defined in the context of this description as an elongate plate with a plurality of fold and/or pivot zones so that the plate, as seen in its entirety, is deformable by being folded and/or pivoted between a first straightened position and a second folded position. The word 'folding' in folding plate is not intended to limit the scope of the word but refers only to a preferred embodiment of the invention. Pivot zone is defined as a zone which allows rotation of two stiffer parts relative to each other. A pivot zone can be formed in different ways, for instance by connecting two parts via a shaft. The preferred embodiment in the invention is a fold zone, wherein a plate part, which is then referred to as the fold zone, allows rotation of two stiffer parts relative to each other through deformation. The advantage of applying a fold zone as pivot zone is that this allows the folding plate to be manufactured as single piece.

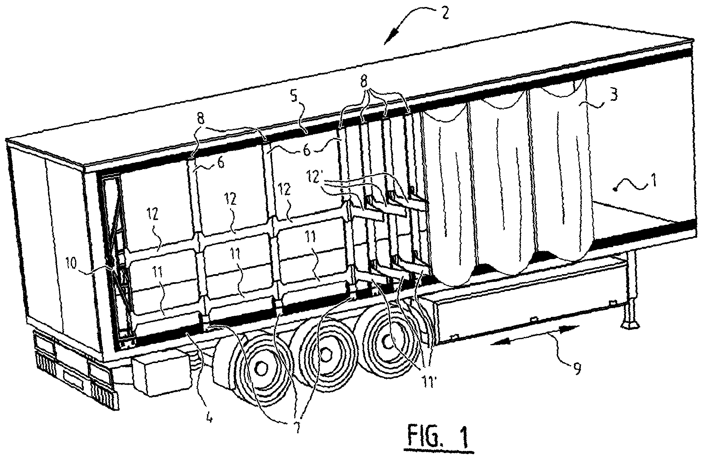

The invention relates to a system for suspending a tarpaulin for the purpose of closing a side of a loading space. Loading space 1 is preferably defined here by a load container 2, in particular a mobile load container. The mobile load container is shown in figure 1 as a trailer of a truck. Such mobile load containers 2 are typically used to transport goods. It will be apparent that the invention is not only applicable to trailers of trucks, but also to railway wagons, trucks with fixedly constructed load container and further mobile load containers with loading spaces for transporting goods.

Such load containers typically have dimensions which are limited by law. In Belgium for instance an outer dimension with a maximum width of 2.55 m is thus imposed for a non-refrigerated load container of a truck. These imposed maximum outer dimensions affect the maximum loading space in the load container. In order to maximize this loading space the wall of the loading space is preferably formed on an outermost peripheral edge of the load container. Bearing and support elements with which the load container is constructed and which have a cross-section larger and thicker than the wall of the loading space are therefore preferably located inside this wall so that no part, or only a small part, of these elements protrudes outside the wall, The outer dimensions are in this way defined substantially by the wall of the loading space, this maximizing the room available in the loading space.

The wall is preferably formed by a tarpaulin 3. A tarpaulin 3 typically has a small thickness and will therefore be suitable as wall of a load container 2 for closing a loading space 1 since it takes up little loading space 1. A tarpaulin 3 further has the advantage that it is flexible and, provided it is attached via a suitable suspension system, can be pushed away to one side, as illustrated in figure 1, wherein tarpaulin 3 has been pushed partially to a left-hand side of the trailer.

Figure 1 shows a trailer wherein tarpaulin 3 is suspended via a suspension system with carriages and support beams, wherein the support beams are located on the underside as well as on the upper side. Figure 1 shows on the left-hand side of the trailer the suspension system without tarpaulin, first with straightened folding plates, then with folded folding plates, and in addition the figure shows a part of the suspension system with tarpaulin 3. In figure 1 the upper support beam is designated with reference numeral 5 and the lower support beam is designated with reference numeral 4. Upright supporting beams 6 extend between the lower and upper support beams 4, 5. These upright supporting beams 6 comprise on their underside respective lower carriages 7 which are compatible with lower support beam 4. On the upper side the upright supporting beams 6 comprise upper carriages 8 which are compatible with the upper support beam. The tarpaulin is then connected to upright supporting beams 6 such that the side wall of the loading space can be closed off with the tarpaulin.

Making use of an upper support beam 5 and a lower support beam 4 has the advantage that the tarpaulin is held fixedly both at the top and bottom both in the closed position and the open position as well as during opening and closing, and so cannot move away from the loading space. This is particularly important in the case of trucks which are used in urban areas for loading and unloading goods. If such a truck were to have only an upper support beam, and the tarpaulin hangs downward from this upper support beam without being held fixedly at the bottom, the tarpaulin could move away from the loading space at the bottom and thereby damage surrounding objects such as cars and buildings, or injure people. This is prevented in the system of the invention by attaching the tarpaulin not only to an upper support beam 5, but also to a lower support beam 4. The system according to the invention is further found to be considerably less labour-intensive during opening and closing than similar systems without lower support beam.

Lower support beam 4 is provided with rails and lower carriages 7 are provided with wheels which are compatible with these rails such that lower carriages 7 can travel in the rails in a longitudinal direction 9 of support beam 4. Upper support beam 5 likewise comprises rails and upper carriages 8 comprise wheels which are compatible with these rails such that upper carriages 8 can also travel in the rails in a longitudinal direction 9 of upper support beam 5. Because upright supporting beams 6 extend between lower carriages 7 and upper carriages 8, upright supporting beams 6 can move in the longitudinal direction 9, this usually being substantially perpendicularly of the longitudinal direction of supporting beams 6. By moving upright supporting beams 6 in the direction of one end of the side wall of loading space 1 the tarpaulin 3 can be slid open in order to provide access to loading space 1. As the skilled person will appreciate, tarpaulin 3 can also be closed in the same manner.

Further elements, such as a door 10, can extend between upper support beam 5 and lower support beam 4. In the context of the system for attaching a tarpaulin 3 for closing the side of a loading space 1 a door 10 is defined as an upright supporting beam 6 which, in addition to holding the tarpaulin, has an additional functionality. Door 10 of figure 1 has the further function of attaching the tarpaulin on a side to an upright edge of loading space 1. Such a door is described in BE 2012/0619 which is incorporated herein for the description of door 10. A similar door 10 can be provided in the middle of the side wall in order to impart extra sturdiness to the system.

Folding plates 11, 12 are mounted between adjacent upright supporting beams 6. At least one, and preferably two folding plates are mounted between each of the adjacent upright supporting beams 6. A first folding plate 11 is preferably mounted here in a lower zone of upright supporting beam 6, while a second folding plate 12 is preferably provided in an upper half of the upright supporting beam, more preferably between a half and three quarters of the height of upright supporting beam 6.

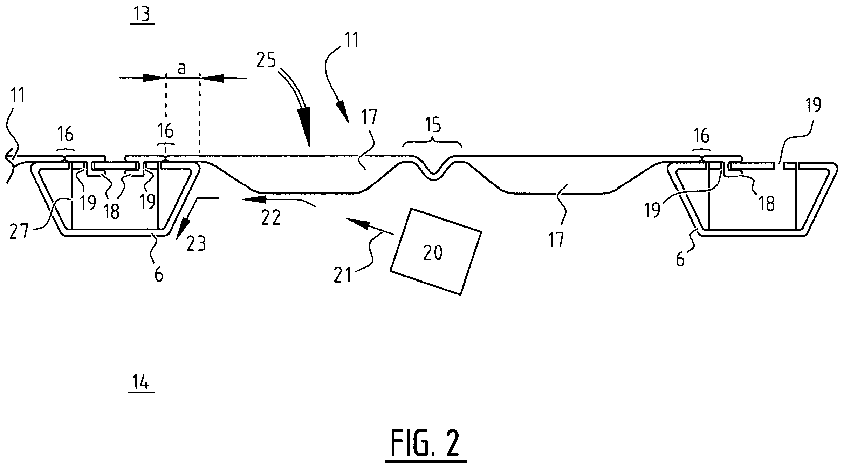

In figure 1 the folding plates in the lower zone are designated with reference numeral 11 and the folding plates in the upper zone are designated with reference numeral 12, wherein the folding plates which are in the straightened state are indicated without further designation and wherein the folding plates which are in the folded state comprise an accent after the reference numeral. A folding plate 11, 12 is shown consistently in the figure between each of the adjacent upright supporting beams 6. Systems can however also be constructed in practice wherein folding plates intentionally do not extend between predetermined upright supporting beams. A door 10 could for instance be positioned for functional reasons close to a first upright supporting beam 6, wherein door 10 is connected only via tarpaulin 3 to the first upright supporting beam 6. A folding plate would then not extend between door 10 and first upright supporting beam 6, and wherein the first upright supporting beam 6 will then be connected via folding plates to a further supporting beam 6. The invention is therefore not limited to a system in which all upright supporting beams 6 are connected to each other by means of folding plates. According to the invention the majority of adjacent upright supporting beams 6 are preferably connected to each other by means of folding plates 11, 12. The manner of connecting the folding plate to the upright supporting beam will be further elucidated with reference to figures 2, 3 and 4.

Figure 2 shows a cross-section of two adjacent upright supporting beams 6 between which a folding plate 11 extends. Folding plate 11 of figure 2 is shown in the straightened state. This is the state which folding plate 11 takes on when the side wall is closed. Reference numeral 13 indicates the outer side of the loading space and reference numeral 14 indicates the interior of the loading space. Upright supporting beams 6 have a substantially trapezoidal cross-section and are preferably formed symmetrically. Upright supporting beams 6 have an outer side which is considerably wider than the inner side, whereby as seen in cross-section the side walls of supporting beams 6 taper toward one another in the direction of the interior of the loading space. The effect hereof is that, when an object collides with upright supporting beam 6, as indicated with arrow 23, because of the shape of upright supporting beam 6 this object is pushed toward the interior 14 of the loading space. Upright supporting beam 6 hereby functions as guard rail for objects which threaten to move out of the loading space.

Folding plate 11 is elongate and typically manufactured from plastic, preferably by means of injection moulding. When they are mounted and the suspension system is in the closed state, the folding plates extend substantially parallel to lower support beam 4 and upper support beam 5.

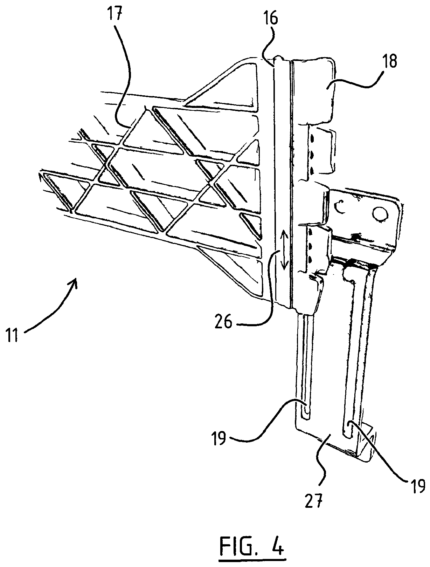

Each folding plate 11 has a central pivot zone 15 and two peripheral pivot zones 16, wherein a stiff plate part 17 extends between each peripheral pivot zone 16 and central pivot zone 15. Folding plates 11 further have attaching means 18 at the location of peripheral pivot parts 16. According to a first embodiment, peripheral pivot parts 16 here allow folding plate 11 to pivot between attaching means 18 and the stiff plate parts 17. A pivot zone is then provided adjacently of the thickened portion to allow the folding plate to pivot between the stiff plate part 17 and the thickened portion. Attaching means 18 are preferably formed as thickened portions which are provided so as to engage in a slot 19. Slot 19 can be provided directly in upright supporting beams 6 such that folding plates 11 engage directly in the slot of upright supporting beams 6. Upright supporting beams 6 can alternatively be provided with a cavity in which an accessory 27 is mounted as described below with reference to figure 4, which accessory 27 then comprises the slots 19 for mounting folding plates 11. In an alternative embodiment of peripheral pivot parts 16 the thickened portion and slot fulfil both the pivoting function and the attaching function, wherein the folding plate is not folded but is connected hingedly to the upright support wall.

Each folding plate 11 extends between adjacent upright supporting beams 6. At the position of upright supporting beam 6 each folding plate 11 is connected thereto in a manner such that peripheral pivot zone 16 lies against the outer side of the upright supporting beam at a distance from the edge of this outer side. This distance is indicated in figure 2 with arrow a. This distance a creates an overlap between the outer side of upright supporting beam 6 and stiff plate part 17. It will be apparent here from the figures that the stiff plate part is not only the thickened portion, but that the plate can also have an increased stiffness adjacently of the thickened portion relative to the fold zones and/or hinges. This overlap a has the result that an inward oriented folding direction, indicated in figure 2 with arrow 25, is blocked. The direct consequence of the overlap a is that, when upright supporting beams 6 are moved toward each other in order to open the side wall, folding plate 11 cannot do otherwise than fold toward the outer side 13. This guarantees correct operation of folding plate 11. An overlap a is necessary here at least at only one peripheral end of folding plate 11. An overlap a is however preferably provided at both peripheral ends of folding plate 11.

As the skilled person will appreciate, pivot zones 15, 16 can be formed in different ways. The central pivot zone is preferably formed as a fold zone as shown in figure 1 which is formed in Ω shape wherein folding plate 11 has a thickness at fold zone 15 which allows folding of the folding plate. The use of an Ω-shaped central fold zone has the further advantage that the Ω will function as spring when the folding plate is loaded in the longitudinal direction. When an object 20 makes a colliding movement 21 and collides with upright supporting beam 6 as indicated with arrow 23, a force in the longitudinal direction will be absorbed by folding plate 11. The Ω shape is particularly suitable for absorbing such an impact. A straight piece of plate material with a thickness allowing the plate to fold could however also be provided as fold zone. The elasticity of folding plate 11 will here still be able, though less optimally, to absorb a force caused by a collision 21. Folding plate 11 has a thickness, width and length. At the fold zones 15, 16 both the thickness of the plate and the width of the plate can be modified so as to obtain optimal folding properties. In figure 2 the peripheral pivot zones are shown as substantially linear fold zones which allow relatively tight folding of the plate.

The stiff plate parts 17 are preferably formed at least partially by a thickening of the plate. This thickened portion is in addition preferably oriented toward an interior of the loading space when the folding plate is mounted. The thickening of stiff plate parts 17 toward the interior 14 has the result that, when an object 20 makes a colliding movement 21, object 20 will collide with plate 11 on the inner side of stiff plate part 17, as indicated with arrow 22. Because stiff plate part 17 is thickened toward the inside, further movement of the object will have the result that the object collides with the trapezoidal upright supporting beam 6 as indicated with arrow 23, whereby the combination of folding plate 11 and trapezoidal upright supporting beam functions as guard rail for objects 20. Forces resulting from the collision of object 20 with folding plate 11 and/or upright supporting beam 6 can be absorbed considerably better here than in existing suspension systems for a tarpaulin 3.

Folding plates 11 are preferably formed with a contrasting colour such that a person loading or unloading the loading space has an improved view of the side of the loading space. When an upright supporting beam is situated in the system between two adjacent upright supporting beams, two folding plates 11 are preferably connected to the outer side of upright supporting beam 6. This is also illustrated in figure 2. The folding plates are preferably mounted as closely as possible to each other in order to maximize the overlap a which defines the distance between the peripheral pivot zone and the edge of the outer side of upright support wall 6. Such a maximization allows pivot zone 16 to be formed less tightly, or in other words to be made wider, thus reducing the impact of folding on plastic folding plate 11. Lower folding plates 11 are preferably placed at the same height relative to lower support beam 4 such that a force in the longitudinal direction is transmitted in balanced manner from the one folding plate to the other. The upper folding plates are preferably also placed at the same height for the same reason.

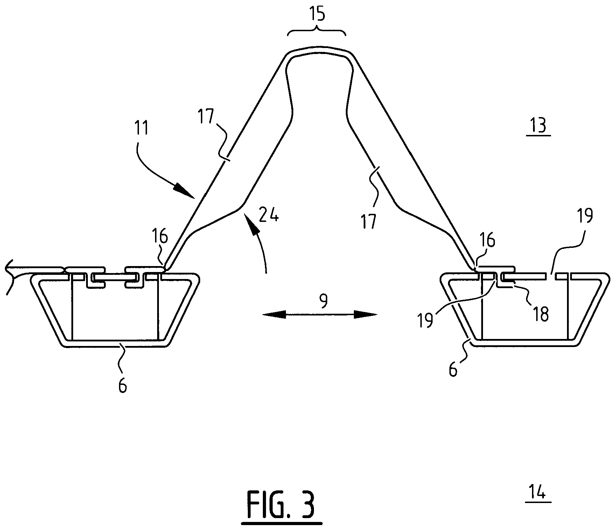

Figure 3 shows the same cross-section as figure 2, but wherein folding plate 11 is in a folded state. By moving upright supporting beams 6 as shown in figure 2 toward each other in longitudinal direction 9 the folding plate 11 will be forced to fold as shown in figure 3. This is because folding in the folding direction as indicated with arrow 25 in figure 2 is blocked by the overlap a. Stiff plate parts 17 will therefore fold in an outward direction, also indicated in figure 3 with arrow 24. Tarpaulin 3 (not shown in figures 2 and 3) typically has a considerably greater flexibility and freedom of movement relative to upright supporting beams 6 than folding plates 11 and 12. When the tarpaulin is connected to upright supporting bearns 6 and folding plates 11 and 12 are provided between adjacent upright supporting beams 6, folding plates 11, 12 will push the tarpaulin to an optimal concertina-like state. In this optimal concertina-like state each fold of the tarpaulin extending between two adjacent upright supporting bearns 6 extends in the direction of the outer side 13 of the loading space so that no obstruction can occur in the interior of the loading space. This guarantees a proper operation of the suspension system for closing a side wall of a loading space by means of a tarpaulin. It is noted here that it is not necessary to connect tarpaulin 3 to folding plates 11, 12.

Figure 4 shows an acccssory 27 which is adapted for mounting in a slot of an upright supporting beam 6. The accessory comprises two slots 19 which are provided on one side, in the figure the upper side, with a further incision such that the folding plate can be pushed with a thickened portion via the incision into the slot The folding plate can preferably be mounted in slot 19 by means of a mounting movement 26 in the longitudinal direction of upright supporting beam 6. This allows folding plates to be mounted and detached without special tools and without the upright supporting beams having to be disassembled. A folding plate with a defect in a system as described above can simply be pushed with its thickened portion 18 out of slot 19, after which a new folding plate can be pushed into slot 19. The skilled person will appreciate that different shapes and sizes of thickened portions can be applied to connect a peripheral end of folding plate 11 to upright supporting wall 6.

The skilled person will appreciate on the basis of the above description that the invention can be embodied in different ways and on the basis of different principles. The invention is not limited to the above described embodiments. The above described embodiments and the figures are purely illustrative and serve only to increase understanding of the invention. The invention will not therefore be limited to the embodiments described herein, but is defined in the claims.

## Claims

1. System for attaching a tarpaulin (3) for the purpose of closing a side of a loading space (1), which system comprises an upper support beam (5) and a lower support beam (4) situated at the height of respectively an upper side and a lower side of the loading space, which system further comprises a plurality of upright supporting beams (6) which each comprise an upper carriage (8) compatible with the upper support beam and a lower carriage compatible (7) with the lower support beam such that the upright supporting beams are connected via the carriages to the support beams and are movable in the longitudinal direction (9) relative to the support beams, which plurality of upright supporting beams are provided for the purpose of connecting to the tarpaulin so that the tarpaulin can be opened and closed by moving the upright supporting beams, **characterized in that** the system further comprises folding plates (11, 12) which each comprise a substantially central pivot zone (15) and two peripheral pivot zones (16), wherein the folding plates mutually connect adjacent upright supporting beams in a manner such that at least one of the peripheral pivot zones of each folding plate extends against an outer side of a respective supporting beam and at a distance (a) from the edge of this outer side.

2. System for attaching a tarpaulin as claimed in claim 1, wherein the folding plates (11, 12) are manufactured from plastic.

3. System for attaching a tarpaulin as claimed in claim 1 or 2, wherein the folding plates (11, 12) extend between the upright supporting beams at the location of a lower zone of the supporting beams, and wherein the folding plates are elongate, wherein the peripheral pivot zones (16) are located at opposite longitudinal ends.

4. System for attaching a tarpaulin as claimed in claim 3, wherein the lower zone is located above a loading floor of the loading space and at a maximum height relative to the loading floor of 0.5 metre, preferably 0.3 metre, more preferably 0.2 metre.

5. System for attaching a tarpaulin as claimed in any of the foregoing claims, wherein the folding plates (11, 12) are mounted between adjacent upright supporting beams so that each peripheral pivot zone extends against an outer side of a respective supporting beam and at a distance from the edge of this outer side.

6. System for attaching a tarpaulin as claimed in any of the foregoing claims, wherein the upright supporting beams (6) are of trapezoidal cross-section such that the outer side of the supporting beam is wider than an inner side of the supporting beam.

7. System for attaching a tarpaulin as claimed in any of the foregoing claims, wherein each folding plate (11, 12) is formed so that a stiff plate part (17) extends in each case between the central pivot zone (15) and each of the two peripheral pivot zones (16).

8. System for attaching a tarpaulin as claimed in claim 7, wherein each folding plate (11, 12) has a straightened position and a folded position, and wherein the stiff plate part has a thickened portion which, in the straightened position of the folding plate, is oriented in the direction of the interior of the loading space.

9. System for attaching a tarpaulin as claimed in claim 8, wherein the thickened portion rests against the edge of the upright supporting beam.

10. System for attaching a tarpaulin as claimed in any of the foregoing claims and claim 3 or 4, wherein at least two folding plates (11, 12) are mounted between adjacent upright supporting beams, wherein a first of the at least two folding plates is positioned in the lower zone and wherein a second of the at least two folding plates is positioned in an upper half of the upright supporting beams.

11. System for attaching a tarpaulin as claimed in any of the foregoing claims, wherein the upper support beam is provided with an upper rail which extends in a longitudinal direction, wherein the upper carriages of the upright supporting beams are provided so as to be guided in the longitudinal direction by the upper rail, and wherein the lower support beam is provided with a lower rail which extends in longitudinal direction, wherein the lower carriages of the upright supporting beams are provided so as to be guided in the longitudinal direction by the lower rail.

12. System for attaching a tarpaulin as claimed in any of the foregoing claims, wherein the upright supporting beams are provided with attaching means which are compatible with the folding plates so that the folding plates (11, 12) can be connected to the upright supporting beams.

13. System for attaching a tarpaulin as claimed in claim 11, wherein the attaching means comprise a slot (19) and wherein the folding plates (11, 12) comprise a thickened portion (18) on either side, this such that the folding plates can engage with their thickened portion in the slot by means of a movement in the longitudinal direction of the upright supporting beams.

14. Trailer for a truck, at least one side wall of which is provided with a system as claimed in any of the foregoing claims.

15. Wagon for a train, at least one side wall of which is provided with a system as claimed in any of the claims 1-12.

## Patentansprüche

1. System zum Befestigen einer Plane (3) um eine Seite eines Laderaums (1) zu verschließen, wobei das System einen oberen Stützbalken (5) und einen unteren Stützbalken (4) aufweist, die sich auf der Höhe einer oberen Seite bzw. einer unteren Seite des Laderaums befinden, wobei das System ferner eine Mehrzahl an senkrechten Stützbalken (6) umfasst, die jeweils einen mit dem oberen Stützbalken kompatiblen oberen Schlitten (8) und einen mit dem unteren Stützbalken kompatiblen unteren Schlitten (7) aufweisen, derart, dass die senkrechten Stützbalken über die Schlitten mit den Stützbalken verbunden und in der Längsrichtung (9) relativ zu den Stützbalken beweglich sind, wobei die Mehrzahl an senkrechten Stützbalken zum Verbinden mit der Plane derart vorgesehen sind, dass die Plane durch Bewegen der senkrechten Stützbalken geöffnet und geschlossen werden kann, **dadurch gekennzeichnet, dass** das System ferner Faltplatten (11, 12) umfasst, die jeweils eine im Wesentlichen zentrale Gelenkzone (15) und zwei periphere Gelenkzonen (16) aufweisen, wobei die Faltplatten benachbarte senkrechte Stützbalken derart miteinander verbinden, dass sich zumindest eine der peripheren Gelenkzonen jeder Faltplatte gegen eine Außenseite eines jeweiligen Stützbalkens und in einem Abstand (a) von der Kante dieser Außenseite erstreckt.

2. System zum Befestigen einer Plane nach Anspruch 1, wobei die Faltplatten (11, 12) aus Kunststoff gefertigt sind.

3. System zum Befestigen einer Plane nach Anspruch 1 oder 2, wobei sich die Faltplatten (11, 12) zwischen den senkrechten Stützbalken in Höhe eines unteren Bereichs der Stützbalken erstrecken und wobei die Faltplatten länglich sind, wobei sich die peripheren Gelenkzonen (16) an gegenüberliegenden Längsenden befinden.

4. System zum Befestigen einer Plane nach Anspruch 3, wobei sich die untere Zone oberhalb eines Ladebodens des Laderaums und in einer maximalen Höhe relativ zum Ladeboden von 0,5 Metern, vorzugsweise 0,3 Metern, noch bevorzugter 0,2 Metern befindet.

5. System zum Befestigen einer Plane nach einem der vorherigen Ansprüche, wobei die Faltplatten (11, 12) zwischen benachbarten senkrechten Stützbalken so angebracht sind, dass sich jede periphere Gelenkzone gegen eine Außenseite eines jeweiligen Stützbalkens und in einem Abstand vom Rand dieser Außenseite erstreckt.

6. System zum Befestigen einer Plane nach einem der vorherigen Ansprüche, wobei die senkrechten Stützbalken (6) einen trapezförmigen Querschnitt aufweisen, so dass die Außenseite des Stützbalkens breiter ist als eine Innenseite des Stützbalkens.

7. System zum Befestigen einer Plane nach einem der vorherigen Ansprüche, wobei jede Faltplatte (11, 12) so ausgebildet ist, dass sich zwischen der zentralen Gelenkzone (15) und jeder der beiden peripheren Gelenkzonen (16) jeweils ein steifes Plattenteil (17) erstreckt.

8. System zum Befestigen einer Plane nach Anspruch 7, wobei jede Faltplatte (11, 12) eine gestreckte Position und eine gefaltete Position einnehmen kann, und wobei der steife Plattenteil einen verdickten Abschnitt aufweist, der in der gestreckten Position der Faltplatte in Richtung des Innenraums des Laderaums ausgerichtet ist.

9. System zum Befestigen einer Plane nach Anspruch 8, wobei der verdickte Abschnitt an der Kante des senkrechten Stützbalkens anliegt.

10. System zum Befestigen einer Plane nach einem der vorherigen Ansprüche und nach Anspruch 3 oder 4, wobei mindestens zwei Faltplatten (11, 12) zwischen benachbarten senkrechten Stützbalken angebracht sind, wobei eine erste der mindestens zwei Faltplatten im unteren Bereich positioniert ist und wobei eine zweite der mindestens zwei Faltplatten in einer oberen Hälfte der senkrechten Stützbalken angeordnet ist.

11. System zum Befestigen einer Plane nach einem der vorherigen Ansprüche, wobei der obere Stützbalken mit einer oberen sich in Längsrichtung erstreckenden Schiene versehen ist, wobei die oberen Schlitten der senkrechten Stützbalken so ausgebildet sind, dass sie in Längsrichtung von der oberen Schiene geführt werden, und wobei der untere Stützbalken mit einer unteren sich in Längsrichtung erstreckenden Schiene versehen ist, wobei die unteren Schlitten der senkrechten Stützbalken so ausgebildet sind, dass sie in Längsrichtung von der unteren Schiene geführt werden.

12. System zum Befestigen einer Plane nach einem der vorherigen Ansprüche, wobei die senkrechten Stützbalken mit Befestigungsmitteln versehen sind, die mit den Faltplatten so kompatibel sind, dass die Faltplatten (11, 12) mit den senkrechten Stützbalken verbunden werden können.

13. System zum Befestigen einer Plane nach Anspruch 11, wobei die Befestigungsmittel einen Schlitz (19) umfassen, und wobei die Faltplatten (11, 12) auf jeder Seite eine Verdickung (18) aufweisen, und zwar derart, dass die Faltplatten mit ihrer Verdickung durch eine Bewegung in Längsrichtung der senkrechten Stützbalken in den Schlitz eingeschoben werden können.

14. Anhänger für einen Lastkraftwagen, bei dem zumindest eine Seitenwand mit einem System nach einem der vorherigen Ansprüche versehen ist.

15. Waggon für einen Zug, bei dem zumindest eine Seitenwand mit einem System nach einem der Ansprüche 1 bis 12 versehen ist.

## Revendications

1. Dispositif de fixation d'une bâche de protection (3) dans le but d'obturer une face d'un espace de chargement (1), lequel dispositif comprend une poutrelle de support supérieure (5) et une poutrelle de support inférieure (4) situées respectivement à la hauteur d'une face supérieure et d'une face inférieure de l'espace de chargement, lequel dispositif comprend, en outre, une pluralité de poutrelles porteuses verticales (6) qui comprennent chacune un chariot supérieur (8) compatible avec la poutrelle de support supérieure et un chariot inférieur (7) compatible avec la poutrelle de support inférieure de telle sorte que les poutrelles porteuses verticales sont reliées par l'intermédiaire des chariots aux poutrelles de support et peuvent être déplacées dans la direction longitudinale (9) par rapport aux poutrelles de support, lesquelles poutrelles de la pluralité de poutrelles porteuses verticales sont agencées dans le but de se coupler à la bâche de protection de telle sorte que la bâche de protection peut être ouverte et fermée en déplaçant les poutrelles porteuses verticales, **caractérisé en ce que** le dispositif comprend, en outre, des plaques pliantes (11, 12) qui comprennent chacune une zone de pivot sensiblement centrale (15) et deux zones de pivot périphériques (16), dans lequel les plaques pliantes relient mutuellement des poutrelles porteuses verticales adjacentes d'une manière telle qu'au moins l'une des zones de pivot périphériques de chaque plaque pliante s'étend contre une face externe d'une poutrelle porteuse respective et à une certaine distance (a) du bord de cette face externe.

2. Dispositif de fixation d'une bâche de protection selon la revendication 1, dans lequel les plaques pliantes (11, 12) sont réalisées à base de matière plastique.

3. Dispositif de fixation d'une bâche de protection selon la revendication 1 ou 2, dans lequel les plaques pliantes (11, 12) s'étendent entre les poutrelles porteuses verticales à l'emplacement d'une zone inférieure des poutrelles de support, et dans lequel les plaques pliantes sont allongées, dans lequel les zones de pivot périphériques (16) sont situées au niveau des extrémités longitudinales opposées.

4. Dispositif de fixation d'une bâche de protection selon la revendication 3, dans lequel la zone inférieure est située au-dessus d'un plancher de chargement de l'espace de chargement et à une hauteur maximum par rapport au plancher de chargement de 0,5 mètre, de préférence, de 0,3 mètre, plus préférablement, de 0,2 mètre.

5. Dispositif de fixation d'une bâche de protection selon l'une quelconque des revendications précédentes, dans lequel les plaques pliantes (11, 12) sont montées entre les poutrelles porteuses verticales adjacentes de telle sorte que chaque zone de pivot périphérique s'étend contre une face externe d'une poutrelle porteuse respective et à une certaine distance du bord de cette face externe.

6. Dispositif de fixation d'une bâche de protection selon l'une quelconque des revendications précédentes, dans lequel les poutrelles porteuses verticales (6) sont de section transversale trapézoïdale de telle sorte que la face externe de la poutrelle porteuse est plus large qu'une face interne de la poutrelle porteuse.

7. Dispositif de fixation d'une bâche de protection selon l'une quelconque des revendications précédentes, dans lequel chaque plaque pliante (11, 12) est formée de telle sorte qu'une partie de plaque rigide (17) s'étend dans chaque cas entre la zone centrale de pivot (15) et chacune des deux zones périphériques de pivot (16).

8. Dispositif de fixation d'une bâche de protection selon la revendication 7, dans lequel chaque plaque pliante (11, 12) présente une position redressée et une position pliée et dans lequel la partie de plaque rigide présente une partie épaissie qui, dans la position redressée de la plaque pliante, est orientée dans la direction de l'intérieur de l'espace de chargement.

9. Dispositif de fixation d'une bâche de protection selon la revendication 8, dans lequel la partie épaissie se repose contre le bord de la poutrelle porteuse verticale.

10. Dispositif de fixation d'une bâche de protection selon l'une quelconque des revendications précédentes et la revendication 3 ou 4, dans lequel au moins deux plaques pliantes (11, 12) sont montées entre des poutrelles porteuses verticales adjacentes, dans lequel une première des au moins deux plaques pliantes est positionnée dans la zone inférieure et dans lequel une seconde des au moins deux plaques pliantes est positionnée dans une moitié supérieure des poutrelles porteuses verticales.

11. Dispositif de fixation d'une bâche de protection selon l'une quelconque des revendications précédentes, dans lequel la poutrelle de support supérieure comporte un rail supérieur qui s'étend dans une direction longitudinale, dans lequel les chariots supérieurs des poutrelles porteuses verticales sont agencés de manière à être guidés dans la direction longitudinale par le rail supérieur, et dans lequel la poutrelle de support inférieure comporte un rail inférieur qui s'étend dans la direction longitudinale, dans lequel les chariots inférieurs des poutrelles porteuses verticales sont agencés de manière à être guidés dans la direction longitudinale par le rail inférieur.

12. Dispositif de fixation d'une bâche de protection selon l'une quelconque des revendications précédentes, dans lequel les poutrelles porteuses verticales comportent des moyens de fixation qui sont compatibles avec les plaques pliantes de telle sorte que les plaques pliantes (11, 12) peuvent être reliées aux poutrelles porteuses verticales.

13. Dispositif de fixation d'une bâche de protection selon la revendication 11, dans lequel les moyens de fixation comprennent une fente (19) et dans lequel les plaques pliantes (11, 12) comprennent une partie épaissie (18) sur chaque face, ceci de telle sorte que les plaques pliantes peuvent se coupler avec leur partie épaissie dans la fente au moyen d'un mouvement suivant la direction longitudinale des poutrelles porteuses verticales.

14. Remorque destinée à un camion, dont au moins une paroi latérale comporte un dispositif selon l'une quelconque des revendications précédentes.

15. Wagon destiné à un train, dont au moins une paroi latérale comporte un dispositif selon l'une quelconque des revendications 1 à 12.
